# EUROPÄISCHE PATENTSCHRIFT

(11) **EP 2 730 443 B1**
(45) Veröffentlichungstag und Bekanntmachung des Hinweises auf die Patenterteilung: **20.03.2019**
(21) Anmeldenummer: 13005177.4
(22) Anmeldetag: 31.10.2013
(51) Int. Cl.: B60J 5/06, B60J 7/10

(54) **Transportfahrzeug**
Transport vehicle
Véhicule de transport

(30) Priorität: 09.11.2012 DE 102012021915
(43) Veröffentlichungstag der Anmeldung: 14.05.2014
(73) Patentinhaber: Fahrzeugwerk Bernard Krone GmbH, 48480 Spelle (DE)
(72) Erfinder: Schwenen, Ralf, 49716 Meppen (DE)
(74) Vertreter: Pott, Ulrich

(56) Entgegenhaltungen:
- DE-B3-102006 044 208
- DE-B4-102006 044 207

## Beschreibung

Die Erfindung bezieht sich auf ein Transportfahrzeug mit einem zumindest bereichsweise über eine Plane verschließbaren Fahrzeugaufbau, wobei die Plane an ihrem in Transportfahrzeugrichtung gesehenen vorderen und/oder hinteren Ende an einem Planenspannprofil mit einer Spannprofilaufnahme und/oder einer Spannstange festlegbar ist.

Transportfahrzeuge der vorgenannten Art sind allgemein bekannt, bei denen die Plane, in aller Regel eine Seitenplane, in Längsrichtung des Fahrzeuges zum Öffnen und zum Verschließen eines Laderaumes zu verschieben ist. Zum Spannen der Plane in ihrer Schließstellung ist in aller Regel eine verdrehbare Spannstange vorgesehen, die eine Nut aufweist, in die ein Kederprofil der Seitenplane einzusetzen ist.

Die Spannstange weist in aller Regel ein Kupplungsstück auf, das in eine entsprechende Aufnahme eines Spannmechanismus einzusetzen und zum Öffnen der Seitenplane aus diesem heraus zu bewegen ist. Zum Erleichtern des Aufschiebens und des Schließens der Plane sind an der Plane Handgriffe vorgesehen. Diese können beispielsweise mit der Plane verklebt oder auf diese aufgenietet sein, womit jedoch ein erhebliches Risiko einhergeht, dass diese abreißen.

Aus der DE 10 2006 044 207 B4 ist eine Horizontalseitenspannvorrichtung für eine Seitenplane eines Nutzfahrzeugaufbaus bekannt, bei der auf der Spannstange eine Verbindungsmuffe aufgesetzt ist, an der eine Handschlaufe zu befestigen ist. Damit geht jedoch ein erheblicher Fertigungsaufwand einher. Die Befestigung der Handschlaufe an der Verbindungsmuffe erfolgt zudem über eine stiftförmige, ein Loch in der Verbindungsmuffe durchsetzende Verbindung, mit der ebenfalls das Risiko einhergeht, dass die Handschlaufe bei einer Verschiebung der Plane abreißt.

Aus der DE 10 2006 044 208 B3 ist eine Seitenspannvorrichtung für Nutzfahrzeuge bekannt, bei der eine Seitenplane über die Seitenspannvorrichtung zu spannen ist. Dazu ist ein Vertikalrohr vorgesehen mit einem in diesem translatorisch beweglichen Schiebling, wobei die Länge des Schieblings der Gesamthöhe der Seitenkante der Seitenplane entspricht. An der Seitenspannvorrichtung ist verdrehbar eine Schelle angebracht, die aus einem Stahlring besteht mit einem abstehenden Befestigungssteg, an dem eine Schlaufe aus einem Gewebeband angebracht ist. Diese Schlaufe kann von einer Bedienperson ergriffen werden, um die Seitenplane zu bewegen.

Hier besteht jedoch ebenfalls das Risiko, dass die Seitenschlaufe abreißt, da diese nicht um den Schiebling bzw. das Rohr umwickelt werden kann.

Es ist Aufgabe der vorliegenden Erfindung, ein Transportfahrzeug der eingangs genannten Art dahingehend weiterzubilden, dass die Spannstange mit Hilfe eines Handgreifelementes aus einem Spannmechnismus herauszubewegen und auch einzusetzen ist, bei der jedoch das Risiko eines Abreißens wesentlich vermindert ist. Zur Lösung dieser Aufgabe zeichnet sich das Transportfahrzeug durch die im Patentanspruch 1 angegebenen Merkmale aus. Während der Erstbewegung wickelt sich das Handgreifelement durch die Zugkraft des Bedieners ab, so dass diese Kraft während eines ersten Öffnungszyklus der Plane auf den aufgewickelten und damit abzuwickelnden Bereich des Handgreifelementes und der Plane an der Spannstange einwirkt. Das Risiko eines Abreißens des Handgreifelementes ist wesentlich vermindert. Durch die Möglichkeit des Auf- und Abwickelns des Handgreifelementes ist das Handling verbessert. Nach dem Abwickeln kann die Spannstange über das dann radial abstehende Handgreifelement aus dem Spannmechanismus bewegt werden. Die Plane, also in aller Regel eine Seitenplane, kann über das Handgreifelement aus einem Spannmechanismus herausbewegt werden und über das abstehende Ende des Handgreifelementes sicher aufgeschoben bzw. aufgezogen werden. Damit wirkt diese Zugkraft auf die Spannstange, womit die direkten Verbindungsstellen des Handgreifelementes mit der Spannstange kraftmäßig nur unwesentlich beaufschlagt sind.
Das Handgreifelement ist in der Nut in der Spannstange angeordnet und zwar in der Nut, in die auch ein Kederprofil der Seitenplane eingeführt ist. Dazu kann das Handgreifelement beispielsweise in Form einer Doppelschlaufe aus einem textilen Material von oben oder von unten in die Nut des Spannprofils eingesetzt werden. Dadurch ist eine schon vorhandene Nut in der Spannstange für die Anordnung des Handgreifelementes genutzt, so dass es sich insgesamt um eine kostengünstige Lösung handelt.
Besonders bevorzugt ist, wenn ein Ende der Doppelschleife des Handgreifelementes so ausgebildet ist, dass es ein im Wesentlichen im Querschnitt rundes Halteprofil umschlingt, so dass dieses Schlaufenende des Handgreifelementes, das das im Querschnitt runde Halteprofil umschlingt, zusammen mit dem Halteprofil in die Nut der Spannstange eingesetzt werden kann. Das Halteprofil mitsamt dem Handgreifelement kann z. B. durch eine Stiftverbindung, eine Niet- oder Schraubverbindung, aber auch durch Verkleben, durch Anschläge oder den Keder der Plane gegen ein axiales Verschieben in der Nut der Spannstange gesichert sein. Alternativ ist es auch möglich, beispielsweise ein Vierkantende einer Spannstange, das in einen Spannmechanismus einzusetzen ist, so zu verlängern, dass das Handgreifelement direkt an dem Vierkantprofil durch übliche Befestigungsverbindungen befestigt werden kann. Durch das integrierte Handgreifelement im Spannrohr bzw. in der Spannstange kann ein ansonsten aufgenieteter Handgriff an der Schiebeplane entlastet oder aber auch ersetzt werden, da der Krafteinleitungspunkt beim Aushebeln und mithin auch beim Aufschieben direkt in das Spannrohr bzw. die Spannstange verlegt ist.

Weitere wesentliche Ausgestaltungen der Erfindung ergeben sich aus weiteren Unteransprüchen, der nachfolgenden Beschreibung und der Zeichnung. In der Zeichnung zeigen:
- Fig. 1: eine Seitenansicht eines Ausführungsbeispiels eines Nutzfahrzeuges,
- Fig. 2: ausschnittsweise vergrößert die Einzelheit II in Fig. 1,
- Fig. 3: eine Seitenansicht auf die Spannstange mit integriertem Handgreifelement,
- Fig. 4: eine Querschnittsdarstellung des Ausführungsbeispiels nach Fig. 3, und
- Fig. 5: eine perspektivische Darstellung des Ausführungsbeispiels der Spannstange nach Fig. 3.

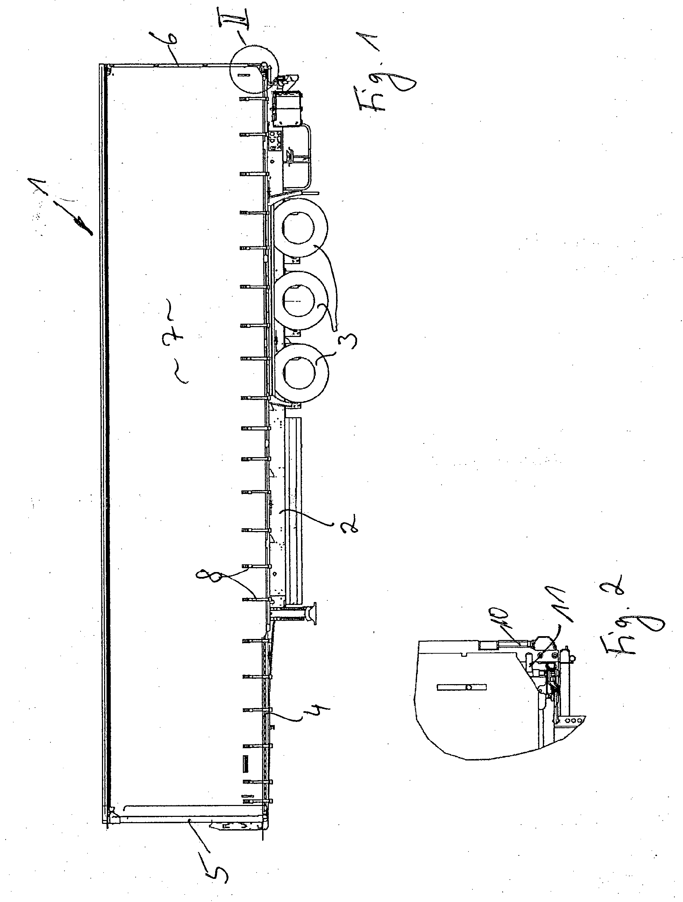

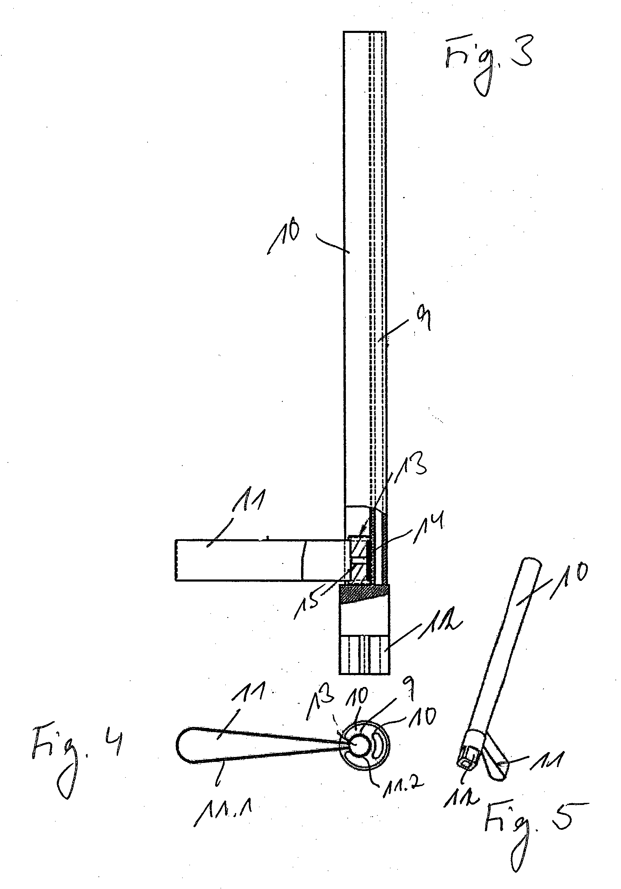

In der Zeichnung sind grundsätzlich übereinstimmende Teile mit übereinstimmenden Bezugsziffern versehen. Allgemein mit 1 ist in Fig. 1 ein Nutzfahrzeugaufbau beziffert mit einem Fahrgestell 2, mit Rädern 3, dessen Laderaumboden 4 von einer Vorderwand 5 und einer Rückwand 6 mit in aller Regel Rückwandtüren versehen ist und einer Seitenplane 7, die über Planenspanner 8 mit dem Fahrgestell in Vertikalrichtung gespannt ist. An der Vorderwand 5 ist die Seitenplane 7 in eine Nut des Planeneinhakprofils oder dergleichen Befestigungsmittel eingelassen und an der Rückwandung 6 bzw. dem Heckportal mit einem Kederprofil in eine Nut 9 (Fig. 3, Fig. 4) einer Spannstange 10 eingelassen. Diese Spannstange 10 hat am unteren Ende ein Vierkantprofil 12, das in einem im Einzelnen nicht näher erläuterten Spannmechanismus einzulassen ist und aus diesem auch wieder auszuheben ist zum Verschieben der Plane 7, wobei über diesen Spannmechanismus die Spannstange 10 zum Spannen und Entspannen der Plane 7 zu drehen ist. An der Seitenplane 7 können zusätzliche, aufgenietete Handgriffe zum Verschieben der Plane 7 angeordnet sein. In die Spannstange 10 ist ein Handgreifelement 11 in Gestalt einer Schlaufe aus einem flexiblen, beispielsweise textilem Material eingesetzt. Alternativ ist es möglich, sowohl an der Rückwand als auch an der Vorderwand 5 die Spannstangen 10 vorzusehen. Diese ist derart in der Spannstange 10 angeordnet, dass sie in die Nut 9 eingreift. Das Handgreifelement 11 ist in Gestalt einer Doppelschlaufe ausgebildet mit einem ersten Schlaufenteil 11.1 und einem zweiten Schlaufenteil 11.2. Das Schlaufenteil 11.2 umgreift ein im Querschnitt im wesentlichen rundes Halteprofil 13, das in die Nut 9 der Spannstange 10 einzusetzen ist, und zwar mitsamt dem zweiten Schlaufenteil 11.2. Über eine Bohrung 14 kann ein Befestigungsmittel 15 eingesetzt werden, um das im Querschnitt runde Halteprofil 13 der Spannstange 10 gegen ein axiales Verschieben zu sichern. Alternativ ist es selbstverständlich auch möglich, das Handgreifelement auf eine andere Weise in der Nut 9 der Spannstange 10 zu sichern. Alternativ ist es ebenfalls möglich, das Handgreifelement beispielsweise an dem verlängerten Vierkantprofil 12, das in den Spannmechanismus einzusetzen ist, anzuordnen, um die Spannstange 10 nach ihrem gespannten Zustand über das Handgreifelement 11 zu betätigen und die Seitenplane 7 zunächst von der Spannstange 10 abzuwickeln. Beim Spannen wird die Handschlaufe so weit auf die Spannstange 10 aufgewickelt, dass sie nur noch mit einem Restende der Schlaufe 11.1 des Handgreifelementes 11 tangential absteht, ansonsten aber aufgewickelt ist.

## Patentansprüche

1. Transportfahrzeug (1) mit einem zumindest bereichsweise über eine Plane (7) verschließbaren Fahrzeugaufbau, wobei die Plane (7) an ihrem in Transportfahrzeugrichtung gesehenen vorderen und/oder hinteren Ende an einem Planenspannprofil oder Einhakprofil mit einer Spannstange (10) festlegbar ist, wobei die Spannstange (10) mit einem zumindest bereichsweise flexiblen und an der Spannstange (10) fixiert ausgebildeten Handgreifelement (11) versehen ist, welches beim Spannen der Plane (7) durch die Spannstange (10) auf dieser zumindest teilweise derart aufwickelbar ist, dass das Handgreifelement (11) im gespannten Zustand der Plane (7) nur mit einem Teilbereich in tangentialer Ausrichtung von der Spannstange (10) absteht und **dadurch gekennzeichnet, dass** das Handgreifelement (11) in einer Nut der Spannstange (10) einenends angeordnet ist und an einem in der Nut (9) der Spannstange (10) angeordneten Halteprofil (13) angreift.

2. Transportfahrzeug nach Anspruch 1, **dadurch gekennzeichnet, dass** das Handgreifelement (11) als Handschlaufe ausgebildet ist.

3. Transportfahrzeug nach Anspruch 1 oder 2, **dadurch gekennzeichnet, dass** das Handgreifelement (12) zumindest bereichsweise aus einem textilen Material besteht.

4. Transportfahrzeug nach Anspruch 1, **dadurch gekennzeichnet, dass** das Handgreifelement (11) in einer Nut (9) der Spannstange (10) zur Aufnahme eines Kederprofils der Plane (7) angeordnet ist.

5. Transportfahrzeug nach Anspruch 1, **dadurch gekennzeichnet, dass** das Halteprofil (13) im Querschnitt rund ausgebildet ist.

6. Transportfahrzeug nach Anspruch 1 oder 5, **dadurch gekennzeichnet, dass** das Halteprofil in der Nut (9) der Spannstange (10) durch ein Befestigungsmittel oder durch Verkleben gegen eine axiale Verschiebung gesichert ist.

7. Transportfahrzeug nach einem der Ansprüche 1 bis 6, **dadurch gekennzeichnet, dass** das Handgreifelement (11) an einem Vierkantendprofil (12) der Spannstange (10) befestigt ist.

## Claims

1. Transport vehicle (1) comprising a vehicle body which can be closed at least in regions by a tarpaulin (7), it being possible for the tarpaulin (7) to be fastened at its front and/or rear end, as viewed in the direction of the transport vehicle, to a tarpaulin clamping profile or hook-fastening profile by means of a clamping rod (10), the clamping rod (10) being provided with a handle element (11) which is flexible at least in regions and is fixed on the clamping rod (10) and which, when the tarpaulin (7) is being clamped by the clamping rod (10), can be wound on said clamping rod, at least in part, such that, when the tarpaulin (7) is clamped, only a tangentially oriented portion of the handle element (11) protrudes from the clamping rod (10), **characterised in that** one end of the handle element (11) is arranged in a slot of the clamping rod (10) and acts on a retaining profile (13) arranged in the slot (9) of the clamping rod (10).

2. Transport vehicle according to claim 1, **characterised in that** the handle element (11) is in the form of a hand loop.

3. Transport vehicle according to either claim 1 or claim 2, **characterised in that** the handle element (12) consists, at least in regions, of a textile material.

4. Transport vehicle according to claim 1, **characterised in that** the handle element (11) is arranged in a slot (9) of the clamping rod (10) in order to receive a beaded profile of the tarpaulin (7).

5. Transport vehicle according to claim 1, **characterised in that** the retaining profile (13) has a circular cross section.

6. Transport vehicle according to either claim 1 or claim 5, **characterised in that** the retaining profile is secured against axial shifting in the slot (9) of the clamping rod (10) by a fastening means or by gluing.

7. Transport vehicle according to any of claims 1 to 6, **characterised in that** the handle element (11) is fastened to a square end profile (12) of the clamping rod (10).

## Revendications

1. Véhicule de transport (1) comprenant une structure de véhicule pouvant être fermée au moins partiellement par une bâche (7), la bâche (7) pouvant être fixée, à son extrémité avant et/ou arrière vue dans la direction du véhicule de transport, à un profilé de tension de bâche ou d'accrochage comportant une barre de tension (10), la barre de tension (10) étant pourvue d'un élément de préhension manuel (11) qui est conçu pour être au moins en partie flexible et pour être fixé à la barre de tension (10) et qui peut être enroulé au moins en partie sur la barre de tension (10) pendant que la bâche (7) est tendue par celle-ci de telle sorte que, lorsque la bâche (7) est tendue, l'élément de préhension manuel (11) ne dépasse tangentiellement de la barre de tension (10) que dans une zone partielle et **caractérisé en ce que** l'élément de préhension manuel (11) est disposé, à une extrémité, dans une gorge de la barre de tension (10) et s'engage sur un profilé de retenue (13) disposé dans la gorge (9) de la barre de tension (10).

2. Véhicule de transport selon la revendication 1, **caractérisé en ce que** l'élément de préhension manuel (11) est conçu comme une dragonne.

3. Véhicule de transport selon la revendication 1 ou 2, **caractérisé en ce que** l'élément de préhension manuel (12) est au moins partiellement en une matière textile.

4. Véhicule de transport selon la revendication 1, **caractérisé en ce que** l'élément de préhension manuel (11) est disposé dans une gorge (9) de la barre de tension (10) destinée à recevoir un profilé à bourrelet de la bâche (7).

5. Véhicule de transport selon la revendication 1, **caractérisé en ce que** le profilé de retenue (13) a une section transversale ronde.

6. Véhicule de transport selon la revendication 1 ou 5, **caractérisé en ce que** le profilé de retenue est fixé dans la gorge (9) de la barre de tension (10) par un moyen de fixation ou par collage afin de ne pas coulisser axialement.

7. Véhicule de transport selon l'une des revendications 1 à 6, **caractérisé en ce que** l'élément de préhension manuel (11) est fixé à un profilé quadrangulaire (12) de la barre de tension (10).
